# EUROPÄISCHE PATENTSCHRIFT

(11) **EP 0 534 201 B1**
(45) Veröffentlichungstag und Bekanntmachung des Hinweises auf die Patenterteilung: **27.12.1995**
(21) Anmeldenummer: 92115151.0
(22) Anmeldetag: 04.09.1992
(51) Int. Cl.: C09J 4/00, C09J 4/06

(54) **Zweikomponentenklebmasse für die chemische Befestigungstechnik**
Two-component adhesive composition for chemical fixing engineering
Composition adhésive à deux composants pour la technique de fixation chimique

(30) Priorität: 21.09.1991 DE 4131458
(43) Veröffentlichungstag der Anmeldung: 31.03.1993
(73) Patentinhaber: BASF Aktiengesellschaft, 67063 Ludwigshafen (DE)
(72) Erfinder: Cramer, Edwin, Dr., W-6700 Ludwigshafen (DE); Scholz, Dankmar, W-6710 Frankenthal (DE)

(56) Entgegenhaltungen:
- EP-A- 0 199 671
- FR-A- 2 381 072
- FR-A- 2 505 347

## Beschreibung

Die Verwendung von Reaktivharzmassen auf der Basis von ungesättigten Polyesterharzen, Vinylesterharzen oder von Epoxidharzen als Klebe- und Haftmittel für die chemische Befestigungstechnik ist seit langem bekannt. Es handelt sich dabei um Zweikomponentensysteme, wobei eine Komponente das Reaktivharz und die andere Komponente den Harter enthält. Andere, übliche Bestandteile wie Füllmittel, Beschleuniger, Stabilisatoren, Lösungsmittel einschließlich Reaktivlösungsmittel (reaktive Verdünner) können in der einen und/oder der anderen Komponente enthalten sein. Durch Vermischen der beiden Komponenten wird dann die Reaktion unter Bildung eines gehärteten Produktes in Gang gebracht.

Zur Befestigung von Ankerstangen in Bohrlöchern von Beton oder massivem Gestein werden im allgemeinen Patronen mit 2 Kammern zur Trennung der in der Patrone enthaltenen Komponenten verwendet. Die Patrone wird in das Bohrloch eingesetzt, und durch schlagdrehendes Einbringen des Befestigungselementes in die Bohrlöcher werden die Patrone und die Kammern zerstört. Dabei werden die beiden Komponenten gemischt und die Reaktion wird initiiert. Die ausgehärtete Reaktionsharzmasse ist in der Lage, spreizdruckfrei die Lasteinleitung in den Untergrund zu ermöglichen. Vor allen Dingen für Schwerlastverankerungen haben sich derartige Verbundanker in der Vergangenheit bewährt.

Bei Verankerungen in porösem Untergrund, z.B. in Schaumblocksteinen oder in Lehmziegelsteinen, aber auch in Hohlziegelsteinen kann man mit Zweikammer-Kartuschen arbeiten. Die beiden Komponenten der Klebmasse werden gleichzeitig aus der Kartusche herausgedrückt, durch geeignete Vorrichtungen, z.B. Statikmischer oder Schnecken, vermischt und in das Bohrloch gedrückt. In dieses kann dann direkt ein verankerbares Befestigungselement mit beliebig geformtem Querschnitt eingeführt werden, welches nach dem Aushärten des Harzes im Bohrloch fixiert wird; oder man führt in das Bohrloch erst einen Dübel oder eine Innengewindehülse ein, die durch Aushärten des Harzes fixiert werden, und in die dann Schrauben bzw. Ankerstangen eingedreht werden können. Bei Hohlziegelsteinen wird in ein Bohrloch erst eine gitterförmige, zylindrische Hülse aus Kunststoff oder Metall eingesetzt. Dann wird Harz aus der Zweikammer-Kartusche eingepreßt. Durch Einführen eines Dübels oder einer Innengewindehülse wird überschüssige Klebemasse durch die Öffnungen der Siebhülse gedrückt, so daß sich nach dem Aushärten der Klebmasse eine feste Verankerung ausbildet.

Bei Verankerungen hinter Rigips-Platten oder in Hohlkammersteinen wendet man Kartuschen mit schaumfähigen Klebemassen an, wie sie z.B. in EP-A 338 983 beschrieben sind. Die eine Komponente der Klebemasse enthält ein anorganisches Carbonat, z.B. Kreide, die andere Komponente eine Säure, z.B. Polyacrylsäure oder Phosphorsäure. In ein Bohrloch wird eine Innengewindehülse oder eine Siebhülse eingesetzt, in welche die schaumfähige Klebemasse eingedrückt wird. Beim Vermischen der Komponenten wird CO₂ freigesetzt, welches bewirkt, daß die Klebemasse aufschäumt und die Hohlräume ausfüllt, bzw. hinter der Platte eine pilzförmige Verankerung bildet, in der nach dem Aushärten der Klebemasse die Hülsen fixiert werden.

In EP-B 150 555 und EP-A 199 671 sind Patronen zur Verwendung beim Befestigen von Ankerbolzen beschrieben, die zwei voneinander getrennte Kammern enthalten. Die eine Kammer enthält als Reaktionsharz ein Epoxyacrylat (Vinylesterharz) zusammen mit Styrol als Comonomer, die andere ein Härtungsmittel dafür. Bevorzugte Epoxyacrylate sind solche der Formel 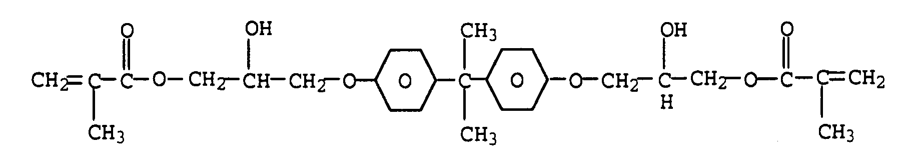 Sie werden im allgemeinen mit dem Reaktivcomonomeren Styrol verdünnt, um sie auf die optimale Verarbeitungsviskosität einzustellen.

Diese Harze weisen eine hohe Härtungsgeschwindigkeit auf, die Härtungsprodukte haben eine gute Chemikalien- und Wasserbeständigkeit und die Verankerung hat eine hohe Ausreißfestigkeit. Das flüchtige Comonomere Styrol führt aber zu Geruchsbelästigungen; darüber hinaus machen behördliche Auflagen besondere Vorkehrungen bei der Herstellung und Handhabung der styrolhaltigen Klebemassen notwendig.

Es ist zwar grundsätzlich möglich, statt Styrol andere Comonomere, z.B. Acrylate, einzusetzen; diese müssen dann aber in so großen Mengen verwendet werden, daß die mechanischen Eigenschaften der Verankerung beeinträchtigt werden.

Der Erfindung lag daher die Aufgabe zugrunde, ein Kunstharz für die chemische Befestigungstechnik bereitzustellen, welches im ausgehärteten Zustand abgewogen gute mechanische Eigenschaften, insbesondere eine gute Haftung an silikatischen Materialien aufweist, und welches praktisch frei von Styrol als Comomomerem ist.

Es wurde nun gefunden, daß diese Aufgabe gelöst wird, wenn man als härtbares Kunstharz ein Dimethacrylat von ethoxyliertem Bisphenol A verwendet. Gegenstand der Erfindung ist demzufolge eine Patrone oder Kartusche für die chemische Befestigung von Ankerstangen, Schrauben und Dübeln in Bohrlöchern, enthaltend
I. ein radikalisch härtbares Kunstharz und
II. ein Härtungsmittel für das Kunstharz,
umfassend zwei oder mehrere Kammern, in welchen das Kunstharz und das Härtungsmittel voneinander getrennt angeordnet sind, wobei das Kunstharz praktisch styrolfrei ist, eine Viskosität bei 23°C zwischen 100 und 10.000 [mPa·s] aufweist und ein Dimethacrylat von ethoxyliertem Bisphenol A der Formel 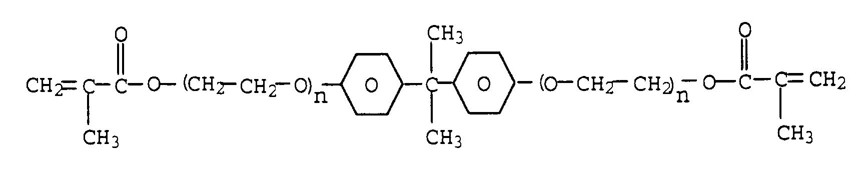 enthält, wobei der mittlere Kondensationsgrad n zwischen 1,05 und 1,5 liegt.

Die FR-A 2 381 072 betrifft eine härtbare Masse aus einem (Meth-)acrylat-Monomeren, Diisopropylbenzoldihydroperoxid als Härtungsinitiator und einem Härtungsbeschleuniger. Unter der Vielzahl der aufgezählten Acrylate und Methacrylate ist das Dimethacrylat von ethoxyliertem Bisphenol A mit n = 1,05 bis 1,5 nicht aufgeführt; die dort genannten Umsetzungsprodukte einer Epoxyverbindung des Bisphenol A mit Methacrylsäure weisen eine andere Formel auf. Die auf Seite 13 unten formelmäßig beschriebene Verbindung ist zwar ein Dimethacrylat von ethoxyliertem Bisphenol A, sie ist jedoch kein Epoxydimethacrylat nach Seite 13 Mitte. Insofern ist die Lehre von FR-A 2 381 072 nicht klar. Die härtbaren Massen sollen als Dichtungsmassen, Klebstoffe und Anstrichmittel verwendet werden; von der chemischen Befestigung von Ankerstangen, Schrauben und Dübeln in Bohrlöchern ist jedoch nicht die Rede.

Die FR-A 2 505 347 betrifft eine Klebstoffmasse, die in Form einer Beschichtung oder als Folie auf zwei zu verklebende Flächen aufgebracht wird. Die Klebstoffmasse besteht aus einem Acrylat- bzw. Methacrylat-Monomeren a), einem Ethylen/Maleinsäureanhydrid-Reaktionsprodukt als Bindemittel b), einem Initiator c) und einem Beschleuniger d). Unter der Vielzahl der aufgezählten Monomeren a) ist auch ein Dimethacrylat von Bisphenol A genannt. Das Bindemittel b) wird als wässrige Lösung eingesetzt. Die Klebstoffmasse enthält also verhältnismäßig viel Wasser, welches nach der Applikation auf die zu verklebende Oberfläche wieder verdampft wird. Eine solche Masse wäre für die Befestigung von Ankerstangen, Schrauben und Dübeln in Bohrlöchern ungeeignet. Da bei der Applikation der Klebstoffmasse in Patronen oder Kartuschen ein Verdampfen des Wassers nicht möglich ist, würde dieses zusammen mit dem Kunstharz in das Bohrloch eingebracht werden. Dort würde es während des Aushärtprozesses in den mineralischen Untergrund des Bohrlochs diffundieren. Dadurch würden sich Poren und Schrumpfstellen in der ausgehärteten Klebstoffmasse bilden, was eine geringe Ausreißfestigkeit zur Folge hätte.

In der Regel wird die Konfektionsform einer 2-Kammerpatrone gewählt. Als bewährte Ausführungsform haben sich Glaspatronen gezeigt, da das "Verpackungsmittel" Glas beim Mischprozeß fein zermahlen und dann als verstärkender Füllstoff in die Bindemittelmatrix integriert wird. Weiterhin können Mehrkammerpatronen aus keramischem Material eingesetzt werden, wie sie beispielsweise in DE-A 39 29 603.2 beschrieben sind. Ferner sind für großvolumige Patronen auch verschiedene Kunststoffoliensysteme - sogenannte Schlauchpatronen - einsetzbar. Grundsätzlich ist es auch möglich, eine Komponente, vorzugsweise das Härtungsmittel durch Makroverkapselung von der anderen Komponente zu trennen.

Als Kartuschen werden vorzugsweise Zweikammerkartuschen verwendet, wobei die größere Kammer das Harz und die kleinere Kammer das Härtungsmittel enthält. Die größere Kammer hat ein etwa 5 bis 10 mal größeres Volumen als die kleinere Kammer.

Die eine Komponente der erfindungsgemäßen Klebmasse ist ein Kunstharz mit einer Viskosität (bei 23°C) zwischen 100 und 10.000, vorzugsweise 200 bis 2.000 und insbesondere 500 bis 1.500 mPa·s, gemessen in Abwesenheit von Füllstoffen. Es enthält ein Dimethacrylat von alkoxylierten Bisphenol A. Derartige Substanzen werden üblicherweise hergestellt durch Umsetzung von Bisphenol A, Ethylenoxid und anschließender Veresterung mit Methacrylsäure bzw. Umesterung mit einem Methacrylsäureester. Die Viskosität des Kunstharzes kann u.a. durch die Kettenlänge der Alkylenoxid-Gruppen eingestellt werden: Ist das Verhältnis Alkylenoxid : Bisphenol exakt 2 : 1, dann erhält man wachsartige oder kristalline Verbindungen, die als Kunstharz im Sinne der vorliegenden Erfindung nicht geeignet sind. Bei geringer Erhöhung des Verhältnisses erhält man ein niederviskoses, flüssiges Gemisch von Alkylenoxid-Verbindungen unterschiedlicher Kettenlänge; bei sehr langen Alkylenoxidketten im Molekül wird die Viskosität aber wieder sehr hoch. Die optimale Kettenlänge liegt zwischen n=1,05 und n=1,5. Dies ergibt eine Verbindung der Formel: 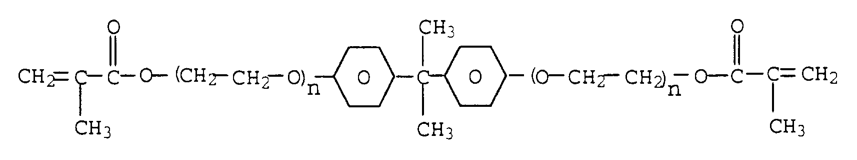 mit n= 1,05 bis 1,5.

Ist die Viskosität des Dimethacrylats zu hoch, dann kann sie durch Zusatz hochsiedender Comonomerer erniedrigt werden. In Frage kommen dabei Acrylate, wie Trimethylolpropantriacrylat und -methacrylat, Butandioldimethacrylat, Ethylenglykoldimethacrylat, Polyethylenglykoldimethacrylat, Neopentylglykoldimethacrylat, Pentaerythritdimethacrylat, Acetacetoxyethylmethacrylat; Allylverbindungen, wie Diallylphthalat, Allylphenole und Allylphenolether, sowie Maleinimide, wie N-Phenylmaleinimid.

Die Menge der Comonomeren im Kunstharz sollte 40 Gew.% nicht übersteigen, weil sonst die mechanischen Eigenschaften der Verankerung zu stark erniedrigt werden. Bevorzugt sind Comonomergehalte zwischen 5 und 25 Gew.%. Das Kunstharz soll praktisch styrolfrei sein, d.h. der Styrolgehalt ist geringer als 1 Gew.%, insbesondere kleiner als 0,1 Gew.%.

Das Kunstharz kann 2 bis 20 Gew.% anderer härtbarer Harze, wie Polyester-, Vinylester-, Bismaleinimid- oder Epoxid-Harze, sowie zum Zweck der Zähmodifizierung 2 bis 20 Gew.% eines Thermoplasten, wie Polyamid, Polyester, oder eines Kautschuks enthalten.

Falls für die Peroxidhärtung Beschleuniger erforderlich sind, werden diese zweckmäßigerweise räumlich zusammen mit dem Harz, d.h. getrennt vom Härter, angeordnet. Geeignete Beschleuniger sind: Aromatische Amine wie N,N-Dimethylanilin, N,N-Diethylanilin; Toluidine und Xylidine wie N,N-Diisopropyliden-para-toluidin, N,N-Dimethyl-p-toluidin, N,N-Bis-(2-hydroxyethyl)-xylidin; ferner Co-, Mn-, Sn- oder Ce-Salze, wie z.B. Cobaltnaphthenat, sowie Mischungen von Amin- und Cobaltbeschleunigern.

Die Beschleuniger sind im Kunstharz in Mengen von vorzugsweise 0,5 bis 5 Gew.% enthalten.

In der Kammer, welche die Kunstharzkomponente enthält, können daneben auch noch Füllstoffe vorhanden sein. Als verstärkende Füllstoffe für die Klebmasse dienen z.B. Quarz, Glas, Korund, Porzellan, Steingut, Schwerspat, Leichtspat, Talkum und Kreide. Die Füllstoffe werden in Form von Sanden, Mehlen oder speziellen Formkörpern (Zylinder, Kugeln usw.) entweder der Harzlösung und/oder dem Härter (Initiator) zugemischt. Die Füllstoffe können als Fasern (fibrilläre Füllstoffe) eingesetzt werden. Bevorzugt und deutlicher verstärkend wirken sich die globulären, inerten Stoffe (Kugelform) aus.

Räumlich getrennt vom Harz ist das Härtungsmittel angeordnet. Bevorzugte Härtungsmittel sind bei niedrigen Temperaturen zerfallende organische Peroxide. Besonders gut geeignet sind Benzoylperoxid und Methylethylketonperoxid, ferner tert.-Butylperbenzoat, Cyclohexanonperoxid, Laurylperoxid und Cumolhydroperoxid, sowie Mischungen verschiedener Peroxide. Die Peroxide werden vorzugsweise in Mengen von 0,5 bis 10 Gew.%, vorzugsweise von 1 bis 5 Gew.% eingesetzt. Die Härtungsmittel werden zweckmäßigerweise auf inerte Füllstoffe aufgebracht, wobei Quarzsande mit Korngrößen von 0,5 ... 3 mm für Patronendimensionen < M16 und von 3 ... 6 mm bei Dimensionen > M20 bevorzugt sind.

Im Fall schaumfähiger Klebemassen wird zweckmäßigerweise das Carbonat zum Harz gegeben, die Säure-Komponente kann entweder mit dem Härter zusammen in eine Kammer oder aber in eine separate dritte Kammer gefüllt werden.

Die erfindungsgemäße Klebmasse kann ohne Geruchsbelästigung und besondere Vorkehrungen für die chemische Befestigungstechnik eingesetzt werden. Derartige Verankerungen weisen ein gutes Rißdehnungsverhalten, geringe Schrumpfspannung und ausgezeichnete Adhäsion an mineralischen Aufnahmewerkstoffen, wie Beton, Naturstein, sowie an Schaum- und Hohlblocksteinen auf.

Die in den Beispielen genannten Teile und Prozente beziehen sich auf das Gewicht.

### Beispiele

A. Herstellung der Dimethylacryl-Verbindung
710 Teile 2,2-Bis(4-(2-hydroxyethoxy)phenyl)-propan, 390 Teile Methacrylsäure, 3 Teile Hydrochinonmonomethylether, 0.3 Teile Bis-tert.butyl-para-cresol sowie 10 Teile Schwefelsäure werden in 340 Teilen Toluol gelöst. Bei Rückfluß des Lösungsmittels werden 80 Teile Wasser azeotrop abdestilliert. Danach wird das Lösungsmittel sowie die restliche Methacrylsäure im Vakuum entfernt. Dem Harz wurden 1 Teil N,N-Diisopropyliden-para-toluidin und 2 Teile Cobaltoctoat-Lösung (mit 10 % Co⁺⁺) als Beschleuniger zugemischt.
Kondensationsgrad (bestimmt durch 1 H -NMR-Spektroskopie) : n=1,1
Viskosität des Harzes bei 25°C: 1.500 mPa·s.
B. Herstellung einer Kartusche

| | | |
|---|---|---|
| Kammer I: | Durchmesser: | 5 cm |
| | Länge: | 15 cm |
| | Inhalt: | 40 % Harz A |
| | | 60 % Quarz 1,5 ... 2,0 mm |
| Kammer II: | Durchmesser: | 2 cm |
| | Länge: | 15 cm |
| | Inhalt: | Mischung Cumolhydroperoxid/Benzoylperoxid 1 : 1, 20 %ig in Gips, angepastet in einem Weichmacher |

Auf die gemeinsame Öffnung der beiden nebeneinander angeordneten Kammern ist eine 15 cm lange, konische Spitze aufgeschraubt, in die eine Mischschnecke eingebaut ist.
In einen Hohlblockstein (Wandstärke 3 cm) wurde ein Loch mit Durchmesser 1 cm gebohrt und in dieses Loch eine 5 cm lange Siebhülse eingesetzt. Aus der Kartusche wurde Harz und Härter ausgepreßt, vermischt und in die Siebhülse eingedrückt. Dann wurde in die Siebhülse eine Gewindehülse eingesetzt. Nach 1 h bei 20°C war das Harz gehärtet und dadurch die Gewindehülse im Hohlblockstein fixiert. Danach wurde ein Ankerbolzen in die Gewindehülse eingeschraubt.

## Patentansprüche

1. Patrone oder Kartusche für die chemische Befestigung von Ankerstangen, Schrauben und Dübeln in Bohrlöchern, enthaltend
I. ein radikalisch härtbares Kunstharz und
II. ein Härtungsmittel für das Kunstharz,
umfassend zwei oder mehrere Kammern, in welchen das Kunstharz und das Härtungsmittel voneinander getrennt angeordnet sind, wobei das Kunstharz praktisch styrolfrei ist, eine Viskosität bei 23°C zwischen 100 und 10.000 [mPa·s] aufweist und ein Dimethacrylat von ethoxyliertem Bisphenol A der Formel 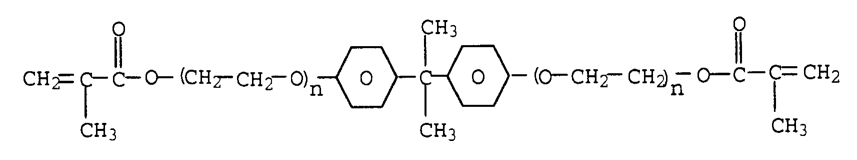 enthält, wobei der mittlere Kondensationsgrad n zwischen 1,05 und 1,5 liegt.

2. Patrone oder Kartusche nach Anspruch 1, dadurch gekennzeichnet, daß das Kunstharz ein Umsetzungsprodukt ist aus
A. 1 Mol Bisphenol A
B. mehr als 2 Mol Ethylenoxid
C. mehr als 2 Mol Methacrylsäure

3. Patrone oder Kartusche nach Anspruch 1, dadurch gekennzeichnet, daß das Kunstharz 0 bis 40, vorzugsweise 2 bis 25 Gew.% eines hochsiedenden Comonomeren enthält.

4. Patrone oder Kartusche nach Anspruch 1, dadurch gekennzeichnet, daß das Kunstharz einen Beschleuniger für das Härtungsmittel enthält, vorzugsweise Cobaltnaphthenat und/oder ein organisches Amin.

5. Patrone oder Kartusche nach Anspruch 1, dadurch gekennzeichnet, daß das Härtungsmittel ein organisches Peroxid ist, welches in Mengen von 0,5 bis 10 Gew.%, bezogen auf das Kunstharz, eingesetzt wird.

## Claims

1. A capsule or cartridge for the chemical fixing of anchor bolts, screws and plugs in drilled holes, containing
I. a free-radically synthetic resin and curable
II. a curing agent for the synthetic resin,
said capsule or cartridge comprising two or more chambers in which the synthetic resin and the curing agent are arranged separated from each another, the synthetic resin being virtually styrene-free, having a viscosity of from 100 to 10 000 [mPa.s] at 23°C and containing a dimethacrylate of ethoxylated bisphenol A of the formula 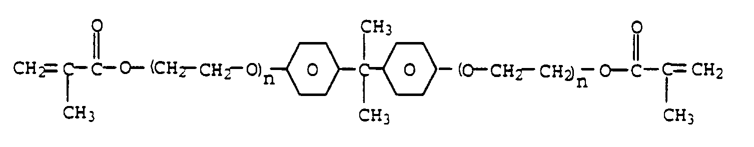 where the average degree of condensation n is within the range from 1,05 to 1,5.

2. A capsule or cartridge as claimed in claim 1, wherein the synthetic resin is a reaction product of
A. 1 mol of bisphenol A
B. more than 2 mol of ethylene oxide
C. more than 2 mol of methacrylic acid.

3. A capsule or cartridge as claimed in claim 1, wherein the synthetic resin contains from 0 to 40, preferably from 2 to 25, % by weight of a high-boiling comonomer.

4. A capsule or cartridge as claimed in claim 1, wherein the synthetic resin contains an accelerant for the curing agent, preferably cobalt naphthenate and/or an organic amine.

5. A capsule or cartridge as claimed in claim 1, wherein the curing agent is an organic peroxide which is used in an amount of from 0.5 to 10% by weight, based on the synthetic resin.

## Revendications

1. Cartouche pour la fixation chimique de tiges d'ancrage, vis et chevilles, dans des trous de perçage, contenant
I. une résine synthétique durcissable avec formation de radicaux, et
II. un agent de durcissement pour la résine synthétique,
comprenant deux chambres ou plus, dans lesquelles la résine synthétique et l'agent de durcissement sont disposés séparément l'un de l'autre, la résine synthétique étant pratiquement exempte de styrène, présentant une viscosité à 23°C comprise entre 100 et 1000 [mPa.s] et un diméthacrylate de bisphénol A éthoxylé, de formule 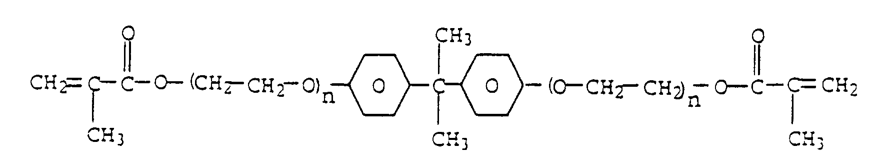 le degré de condensation moyen n étant situé entre 1,05 et 1,5.

2. Cartouche selon la revendication 1, caractérisée en ce que la résine synthétique est un produit de réaction de
A. 1 mole de bisphénol A,
B. plus de deux moles d'oxyde d'éthylène,
C. plus de 2 moles d'acide méthacrylique.

3. Cartouche selon la revendication 1, caractérisée en ce que la résine synthétique contient de 0 à 40, de préférence de 2 à 25, % en poids d'un comonomère à point d'ébullition élevé.

4. Cartouche selon la revendication 1, caractérisée en ce que la résine synthétique contient un accélérateur pour l'agent de durcissement, de préférence du naphthénate de cobalt et/ou une amine organique.

5. Cartouche selon la revendication 1, caractérisée en ce que l'agent de durcissement est un peroxyde organique, utilisé en quantité allant de 0,5 à 10 % en poids, par rapport au poids de résine synthétique.
